# EUROPÄISCHE PATENTSCHRIFT

(11) **EP 2 848 800 B1**
(45) Veröffentlichungstag und Bekanntmachung des Hinweises auf die Patenterteilung: **29.05.2024**
(21) Anmeldenummer: 14002709.5
(22) Anmeldetag: 02.08.2014
(51) Int. Cl.: F02N 3/02, F02P 5/15, F02P 1/00, F02B 63/02, F02D 41/06, F02D 41/20, F02M 69/34, F02M 69/46, F02M 3/05, F02M 1/02, F02M 3/02, F02P 5/155, F02D 41/30, F02D 39/04, F02B 75/02

(54) **Verfahren zum Starten eines Verbrennungsmotors mit einer Startvorrichtung**
Method for starting an internal combustion engine with a starting device
Procédé destiné au démarrage d'un moteur à combustion interne doté d'un dispositif de démarrage

(30) Priorität: 16.08.2013 DE 102013013628
(43) Veröffentlichungstag der Anmeldung: 18.03.2015
(73) Patentinhaber: Andreas Stihl AG & Co. KG, 71336 Waiblingen (DE)
(72) Erfinder: Geyer, Klaus, 71560 Sulzbach (DE); Kiesner, Martin, 71384 Weinstadt (DE); Präger, Jörg, 71364 Winnenden (DE); Bantle, Steffen, 71505 Korb (DE); Fallscheer, David, 70794 Filderstadt (DE); Ames, Erik, 71334 Waiblingen (DE)
(74) Vertreter: Wasmuth, Rolf

(56) Entgegenhaltungen:
- EP-A1- 1 887 204
- EP-A2- 2 031 218
- DE-A1-102005 019 762
- DE-A1-102009 040 321
- US-A- 5 419 291
- US-A1- 2004 025 839

## Beschreibung

Die Erfindung betrifft ein Verfahren zum Starten eines Verbrennungsmotors mit einer Startvorrichtung nach dem Oberbegriff des Anspruchs 1.

Verbrennungsmotoren in tragbaren, handgeführten Arbeitsgeräten wie Motorkettensägen, Trennschleifer, Freischneider, Blasgeräte oder anderen handgeführten Arbeitsgeräten sind überwiegend mit einem Seilzugstarter ausgestattet, um den Verbrennungsmotor manuell zu starten. Der Seilzugstarter greift an der Kurbelwelle des Verbrennungsmotors an und dreht diese.

Dem Verbrennungsmotor wird über einen Ansaugkanal ein Kraftstoff/Luft-Gemisch zugeführt, das - ist der Verbrennungsmotor ein Zweitaktmotor - auch das zum Betrieb eines Zweitaktmotors notwendige Öl enthält. Das angesaugte Kraftstoff/LuftGemisch wird von einem Kolben in einem Brennraum des Verbrennungsmotors verdichtet und von einer Zündkerze gezündet, die von einer Zündeinheit angesteuert ist.

Der Kraftstoff wird dem Ansaugkanal über ein Kraftstoffsystem zugeführt, das einen in den Ansaugkanal mündenden Kraftstoffkanal aufweist, über den die zugeführte Kraftstoffmenge fließt. In dem Kraftstoffkanal ist ein elektrisches Kraftstoffventil angeordnet, das in seinem stromlosen Zustand offen ist und den Kraftstoffkanal freigibt und erst bei Anlegen einer Betriebsspannung den Kraftstoffkanal schließt, so dass der Kraftstoffkanal gesperrt ist und in den Ansaugkanal kein Kraftstoff angesaugt werden kann.

Eine elektronische Steuereinheit steuert das Kraftstoffventil und die Zündung, wobei die elektrische Energie von einem mit der Kurbelwelle drehenden Generator zur Verfügung gestellt ist.

Da das Kraftstoffventil ein stromlos offenes Ventil ist und vor dem Start des Verbrennungsmotors keine elektrische Energie zur Verfügung steht, um das Kraftstoffventil zu schließen ist der Kraftstoffkanal des Kraftstoffsystems zunächst offen. Wird - zum Beispiel über einen Seilzugstarter - der Verbrennungsmotor angeworfen, wird Verbrennungsluft über den Ansaugkanal angesaugt und aufgrund des dadurch entstehenden Saugunterdrucks auch Kraftstoff über die vorgesehenen Kraftstoffpfade in den Ansaugkanal übertreten. Erst nachdem der mit der Kurbelwelle angetriebene Zündgenerator ausreichend Energie zur Verfügung stellt, kann ein Zündfunke an der Zündkerze ausgelöst und das Kraftstoffventil zur Zumessung einer gewünschten Kraftstoffmenge angesteuert werden.

Die Druckschrift DE 10 2005 019 762 A1 zeigt ein Kraftstoffsystem, bei dem der Kraftstoff durch Unterdruck in das Gemischbildungssystem des Ansaugkanals angesaugt wird.

Die EP 1 887 204 A1 offenbart ein Kraftstoffsystem, bei dem unabhängig von dem Druck im Ansaugkanal Kraftstoff über eine Druckpumpe und ein Einspritzventil zugeführt ist.

Die US 2004/0025839 A1 lehrt, das Einspritzventil erst bei ausreichender elektrischer Spannung anzusteuern. Es ist ein Energiemanagement vorgesehen, welches beim Start möglichst rasch alle einzelnen Komponenten des Kraftstoffsystems elektrisch versorgt.

Die Patentanmeldung DE 10 2009 040321 A1 ist auch ein sehr interessantes Dokument aus dem Stand der Technik.

Auch die US 5 419 291 A offenbart ein Kraftstoffsystem mit einem Einspritzventil, über welches ein unter Druck stehender Kraftstoff in den Ansaugkanal eingespritzt wird. Die eingespritzte Einspritzmenge ist abhängig vom Kraftstoffdruck und der Öffnungszeit des Einspritzungsventils.

Der Erfindung liegt die Aufgabe zugrunde, im Startfall eines Verbrennungsmotors einen unkontrollierten Kraftstoffzufluss in den Ansaugkanal zu minimieren und dennoch eine ausreichende Schmierung des Verbrennungsmotors sicherzustellen.

Die Aufgabe wird erfindungsgemäß nach den Merkmalen des Anspruchs 1 gelöst.

Durch die Priorisierung der Energieversorgung des elektrischen Kraftstoffventils vor der Zündung wird erreicht, dass das Kraftstoffventil in einem frühen Stadium geschlossen wird, wodurch ein unkontrollierter Kraftstoffzufluss in den Ansaugkanal unterbunden ist. Die Auslösung eines Zündfunkens erfolgt zeitlich erst nach dem ersten Schließen des Kraftstoffventils, wodurch gewährleistet ist, dass der unkontrolliert zugeflossene Kraftstoff - sofern er zur Bildung eines brennfähigen Gemischs ausgereicht hat - verbrannt wird, um danach über das Kraftstoffventil die zum ordnungsgemäßen Betrieb des Verbrennungsmotors angepasste Kraftstoffmenge kontrolliert zuzuführen.

Das Signal zum Schließen des elektrischen Kraftstoffventils in Abhängigkeit eines Drehzahlabfalls der Kurbelwelle wird beim Startvorgang verzögert. Dies ist z.B. vorteilhaft, wenn der Verbrennungsmotor trocken gelaufen ist, also aufgrund fehlenden Kraftstoffs ausgeht. Insbesondere bei einem Zweitaktmotor wird dem Kraftstoff zur Schmierung Öl zugesetzt. Läuft der Verbrennungsmotor trocken, nimmt die Schmierung ab, so dass eine erhöhte Reibung innerhalb des Verbrennungsmotors gegeben ist. Um den Zustand erhöhter Reibung festzustellen, wird die Drehzahl der Kurbelwelle des Verbrennungsmotors im Startvorgang erfasst und ausgewertet. Startet der Verbrennungsmotor nach einem Anwerfvorgang nicht, wird die Drehzahl wieder auf Null zurückfallen. Die Steigung dn/dt des Drehzahlabfalls auf Null ist abhängig von der Schmierung; ein steiler Drehzahlabfall ist ein Indikator für eine verminderte Schmierung. Wird ein vorgegebener Grenzwert für die Steigung dn/dt des Drehzahlabfalls überschritten, liegt also eine Mangelschmierung vor, wird das Kraftstoffventil im Startvorgang vorteilhaft für eine oder mehrere Kurbelwellenumdrehungen offen gehalten. So kann dem Verbrennungsmotor ausreichend Kraftstoff/Öl-Gemisch zur Verfügung gestellt und eine ordnungsgemäße Schmierung innerhalb des Verbrennungsmotors sichergestellt werden.

Im Startfall wird die vom Zündgenerator erzeugte Energie zunächst zum Schließen des Kraftstoffventils verwendet und erst nach dem Schließen des Kraftstoffventils die Zündung freigeschaltet.

Die zum Betrieb der elektrischen Verbraucher wie der Steuereinheit, des elektrischen Kraftstoffventils und der Zündeinrichtung notwendige elektrische Energie wird ausschließlich von dem Zündgenerator erzeugt. Dabei ist zweckmäßig, mit beginnender Drehung der Kurbelwelle zunächst die Spannungsversorgung der Steuereinheit herzustellen, so dass die Steuereinheit aufgeweckt wird, um ihre Steuerfunktionen - Ansteuerung des Kraftstoffventils, Auslösen der Zündung - auszuüben.

Der Zündgenerator ist derart ausgebildet, dass vor dem oberen Totpunkt OT des Kolbens eine erste - vollständige - Spannungswelle erzeugt wird und eine zweite Spannungswelle vor dem unteren Totpunkt UT des Kolbens erzeugt wird. Dies wird dadurch erreicht, dass über den Umfang des Polrades des Zündgenerators zwei oder mehr Permanentmagnete angeordnet sind, die sich vorzugsweise diametral gegenüberliegen.

Unabhängig von der Betriebstemperatur des Verbrennungsmotors wird bei jedem Start des Verbrennungsmotors mit beginnender Umdrehung der Kurbelwelle erst das Kraftstoffventil bestromt, also geschlossen, bevor von der Steuereinheit ein Zündfunke an der Zündkerze ausgelöst wird. Dabei kann es zweckmäßig sein, das Kraftstoffventil über mehrere Kurbelwellenumdrehungen geschlossen zu halten, zum Beispiel über zwei bis sechs Kurbelwellenumdrehungen, um auf diese Weise den Brennraum mit kraftstofffreier Verbrennungsluft durchzuspülen bevor - von der Steuereinheit dosiert - die zum Betrieb des Verbrennungsmotors notwendige Kraftstoffmenge zugemessen wird. Es hat sich als vorteilhaft erwiesen, das Kraftstoffventil bei einem Startvorgang über drei Kurbelwellenumdrehungen geschlossen zu halten.

Insbesondere ist zweckmäßig, auch bei geschlossen gehaltenem Kraftstoffventil einen Zündfunken auszulösen, damit der unkontrolliert zugeflossene Kraftstoff - sofern ein brennfähiges Gemisch entstanden ist - im Brennraum verbrannt wird, bevor über die Steuereinheit eine kontrollierte, den Betriebsbedingungen des Verbrennungsmotors angepasste Kraftstoffmenge über das Kraftstoffventil zugemessen wird.

Ausführungsbeispiele der Erfindung werden im Folgenden anhand der Zeichnung erläutert. Es zeigen:
- Fig. 1: eine schematische Ansicht eines tragbaren, handgeführten Arbeitsgerätes am Beispiel einer Motorkettensäge,
- Fig. 2: eine schematische Darstellung eines Kraftstoffsystems zur Kraftstoffzufuhr in den Ansaugkanal eines Verbrennungsmotors,
- Fig. 3: eine schematische Darstellung eines Zündgenerators mit zwei Permanentmagneten,
- Fig. 4: in schematischer Darstellung die Drehzahl, den Kurbelwellenwinkel, den Zündzeitpunkt und die Spannung an einem Kraftstoffventil über der Zeit,
- Fig. 5: ein schematisches Flussdiagramm zur Auswertung des Drehzahlabfalls der Kurbelwelle eines Verbrennungsmotors im Startvorgang.

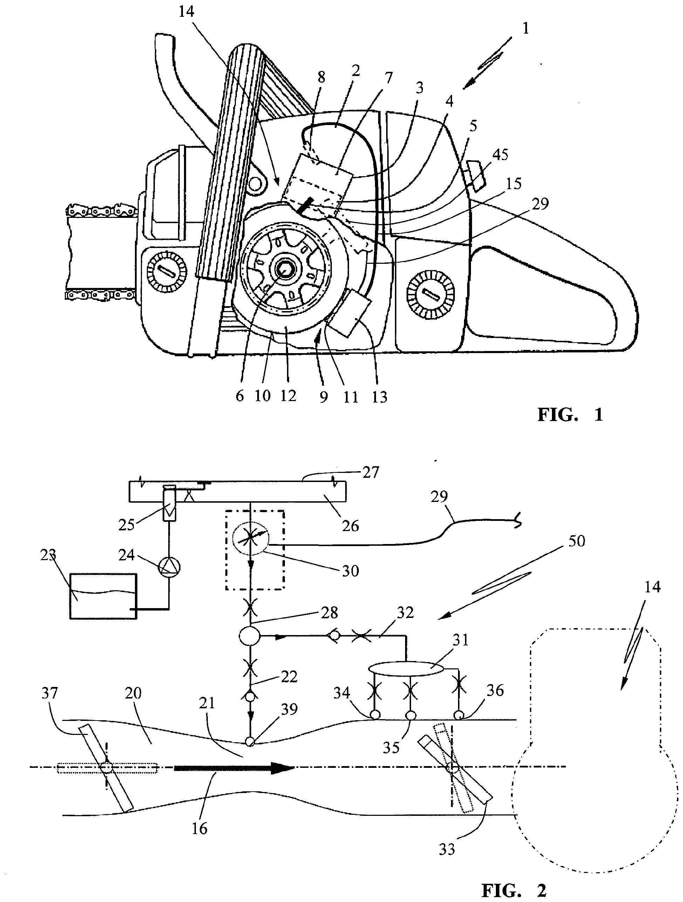

Das in Fig. 1 gezeigte Arbeitsgerät 1 ist als Motorkettensäge ausgebildet. Das Arbeitsgerät 1 könnte auch ein Trennschleifer, ein Blasgerät, ein Freischneider oder dergleichen tragbares, handgeführtes Arbeitsgerät sein.

Im Gehäuse 2 des Arbeitsgerätes 1 ist ein Verbrennungsmotor 14 vorgesehen, der einen Zylinder 3 mit einem darin auf und ab bewegten Kolben 4 aufweist, der über ein Pleuel 5 eine Kurbelwelle 6 antreibt. Dem im Zylinder 3 ausgebildeten, vom Kolben 4 begrenzten Brennraum 7 ist eine Zündkerze 8 zugeordnet, die zur Zündung eines im Brennraum 7 verdichteten Gemischs dient.

Mit der Kurbelwelle 6 läuft ein Lüfterrad 12 um, an dessen Umfang 10 zumindest ein Permanentmagnet angeordnet ist. Der Permanentmagnet wirkt mit einem Joch 11 eines Zündgenerators 9 zusammen, der eine Zündsteuereinheit 13 umfasst. Die Zündsteuereinheit 13 ist über ein Zündkabel 15 mit der Zündkerze 8 verbunden und löst in Abhängigkeit von der Drehlage der Kurbelwelle 6 und damit der Hublage des Kolbens 4 einen Zündfunken zur Verbrennung eines in den Brennraum 7 angesaugten Kraftstoff/Luft-Gemisches aus.

Das Kraftstoff/Luft-Gemisch wird - wie in Fig. 2 schematisch dargestellt - in einem Ansaugkanal 20 gebildet, wozu ein Venturiabschnitt 21 vorgesehen ist, durch den die zum Verbrennungsmotor 14 strömende Verbrennungsluft (Pfeil 16) einen Unterdruck erzeugt, um über einen Hauptdüsenpfad 22 des Kraftstoffsystems Kraftstoff anzusaugen.

Im gezeigten Kraftstoffsystem 50 nach Fig. 2 wird der Kraftstoff aus einem Tank 23 über eine Kraftstoffvorförderpumpe 24 und ein Regelventil 25 einer Regelkammer 26 zugeführt. Das Regelventil 25 ist druckgesteuert und öffnet immer dann, wenn sich aufgrund des Abflusses von Kraftstoff die Regelmembran 27 in Richtung auf die Regelkammer 26 verlagert.

Der Kraftstoffkanal 28 aus der Regelkammer 26 zum Hauptdüsenpfad 22 ist von einem elektrisch zu betätigenden Kraftstoffventil 30 gesteuert, welches von der Zündsteuereinheit 13 über ein Ventilkabel 29 elektrisch angesteuert ist.

Der Kraftstoffkanal 28 verzweigt nach dem Kraftstoffventil 30 in den Hauptdüsenpfad 22 und den Leerlaufpfad 32, der über eine Leerlaufkammer 31 und mehrere im Schwenkbereich der Drosselklappe 33 in den Ansaugkanal 20 mündende Leerlaufdüsen 34, 35 und 36 speist.

Im Startfall wird eine stromauf des Venturiabschnitts 21 liegende Chokeklappe 37 geschlossen, so dass der Unterdruck im Ansaugkanal 20 beim Start erhöht ist. Der erhöhte Unterdruck führt - ist das Kraftstoffventil 30 geöffnet - zu einem erhöhten Kraftstofffluss über die Hauptdüse 39 des den Hauptdüsenpfades 22 sowie die Leerlaufdüsen 34, 35 und 36 des Leerlauspfades 32 in den Ansaugkanal 20. Dadurch wird dem Verbrennungsmotor 14 ein für den Start angereichertes Gemisch (fettes Gemisch) zugeführt.

Steht die Chokeklappe 37 offen (punktierte Darstellung), wird im Startfall lediglich die Drosselklappe 33 in eine Startstellung verschwenkt, um eine ausreichende Kraftstoffzufuhr über die Leerlaufdüsen 35 und 36 zu gewährleisten.

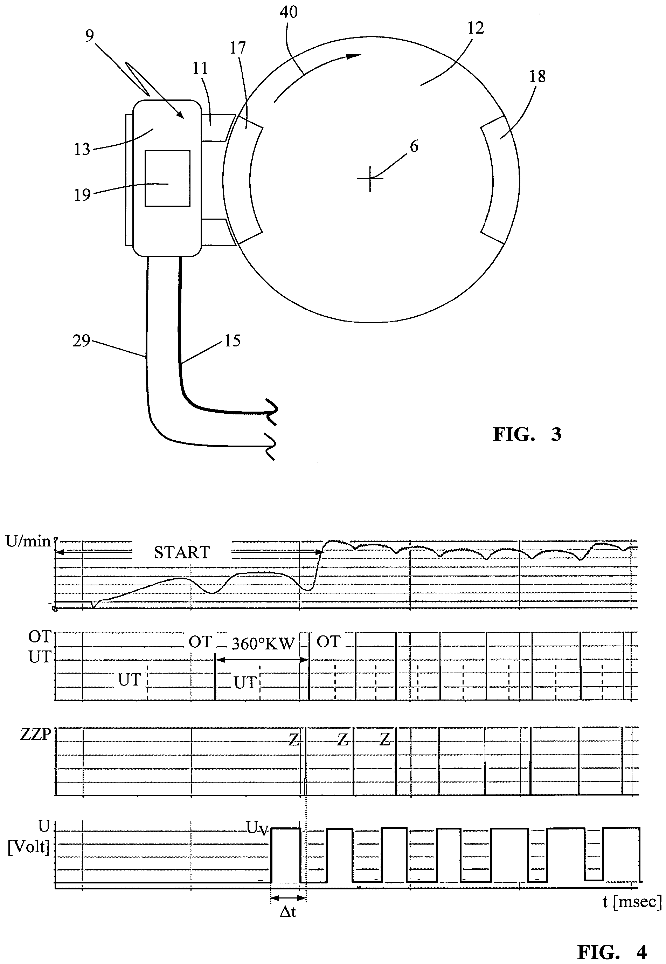

Die elektrische Energieversorgung der Zündsteuereinheit 13, der Zündkerze 8 und des Kraftstoffventils 30 erfolgt durch den in Fig. 3 schematisch dargestellten Zündgenerator 9, der aus zwei mit der Kurbelwelle 6 rotierenden Permanentmagneten 17 und 18 und einem zugeordneten Joch 11 besteht. Die Permanentmagnete 17 und 18 sind am Umfang des Lüfterrades 12 angeordnet und wirken mit dem Joch 11 zusammen, welches auf seinen Schenkeln nicht näher dargestellte Spulen trägt. Das Joch 11, dessen Spulen sowie die elektronische Schaltung zur Ansteuerung des Kraftstoffventils 30 und der Zündkerze 8 sind in einer gemeinsamen Baueinheit zur Zündsteuereinheit 13 vergossen. Ein vorzugsweise in der Zündsteuereinheit 13 integrierter Mikroprozessor 19 steuert die Zündung einerseits und die Öffnungsdauer des Kraftstoffventils 30 andererseits.

Das Kraftstoffventil 30 ist ein stromlos offenes Ventil, wie es in der DE 102 42 816 A1 beschrieben ist, deren Offenbarung Teil der vorliegenden Anmeldung ist.

Wird der Verbrennungsmotor 14 des Arbeitsgerätes 1 gestartet, so erfolgt dies üblicherweise durch einen Seilzugstarter 45.

Mit den ersten Umdrehungen der Kurbelwelle wird über den Ansaugkanal 20 in Pfeilrichtung 16 Verbrennungsluft angesaugt, wodurch ein entsprechender Unterdruck entsteht, der an der Hauptdüsenöffnung 37 ebenso ansteht wie an den Leerlauföffnungen 34, 35 und 36. Bei geöffnetem Kraftstoffventil 30 würde somit Kraftstoff in den Ansaugkanal 20 eintreten.

Wie in dem Schaubild nach Fig. 4 wiedergegeben, wird - zum Beispiel über den Seilzugstarter - eine vollständige Umdrehung der Kurbelwelle 6 von 360° Kurbelwellenwinkel (KW) erfolgen, wobei der obere Totpunkt OT des Kolbens 4 überwunden wird. In der oberen Darstellung in Fig. 4 ist die aktuelle Drehzahl wiedergegeben. Nach dem ersten Durchdrehen der Kurbelwelle über 360° Kurbelwellenwinkel in Drehrichtung 40 ist über das magnetische Feld der Permanentmagneten 17 und 18 in den Spulen des Jochs 11 ausreichend Energie induziert, so dass das Kraftstoffventil 30 und die Zündung angesteuert werden können. Der Zündzeitpunkt ZZP ist in Fig. 4 unterhalb der Kolbenlage (OT, UT) dargestellt. Nach der Erfindung ist vorgesehen, dass die bei Beginn der Drehung der Kurbelwelle 6 in Drehrichtung 40 erzeugte elektrische Energie zunächst auf das Kraftstoffventil 30 gegeben wird, damit dieses - stromlos offene - Ventil zunächst geschlossen wird. Wie in Fig. 4 unten dargestellt, wird dem Kraftstoffventil 30 eine Spannung U aufgegeben, wobei die Spannung Uv am Kraftstoffventil 30 um einen Zeitfaktor Δt vor der ersten Zündung liegt, also bevor die Steuereinheit 13 einen Zündfunken Z (Diagramm des Zündzeitpunktes ZZP) an der Zündkerze 8 auslöst.

Das Gesamtsystem ist derart ausgelegt, dass nur der Zündgenerator 9 die zum Betrieb der elektrischen Verbraucher wie der Zündkerze 10, dem Kraftstoffventil 30 und dem Mikroprozessor 19 notwendige Energie erzeugt.

Der Ablauf ist etwa derart, dass mit beginnender Drehung der Kurbelwelle 6 und einem erstem Vorbeidrehen eines Permanentmagneten 17 oder 18 am Joch 11 des Zündgenerators 9 zunächst die Spannungsversorgung der Steuereinheit 13 hergestellt und somit der Mikroprozessor der Steuereinheit 13 aufgeweckt wird, damit dieser arbeitet und seine Steuerungsaufgaben erfüllen kann.

Der Zündgenerator 9 ist derart ausgelegt, dass eine erste Spannungswelle - durch den ersten Permanentmagneten 17 - vor einem oberen Totpunkt OT des Kolbens 4 und eine zweite Spannungswelle durch den Permanentmagneten 18 vor einem unteren Totpunkt UT des Kolbens 4 erzeugt wird. Dies stellt sicher, dass nach einer Umdrehung ausreichend Energie zur Verfügung steht, um das Kraftstoffventil 30 zu schließen. Dabei wird unabhängig von der Betriebstemperatur des Verbrennungsmotors 14 bei jedem Start des Verbrennungsmotors 14 mit beginnender Umdrehung der Kurbelwelle 6 erst das Kraftstoffventil 30 bestromt, bevor ein Zündfunken Z ausgelöst wird.

Es kann vorgesehen sein, das Kraftstoffventil über mehrere Kurbelwellenumdrehungen geschlossen zu halten, vorzugsweise über zwei bis sechs Kurbelwellenumdrehungen, um auf diese Weise sicherzustellen, dass keine Überfettung des Startgemisches - insbesondere beim Heißstart - auftreten kann. Zweckmäßig ist das Ventil über drei Kurbelwellenumdrehungen vollständig geschlossen gehalten. Dabei kann es zweckmäßig sein, trotz geschlossenem Kraftstoffventil einen Zündfunken auszulösen, um eventuell im Brennraum vorhandenes Restgemisch zu verbrennen.

Nach der fest vorgegebenen priorisierten Ansteuerung des Kraftstoffventils und einer oder mehr Kurbelwellenumdrehungen ist der Mikroprozessor der Steuereinheit in Betriebsbereitschaft und übernimmt nun die Steuerung der Öffnungszeiten des Kraftstoffventils in Abhängigkeit von einem oder mehreren aktuellen Betriebsparametern wie z. B. der Temperatur, der Drehzahl, der Öffnungsstellung der Drosselklappe oder dgl. Entsprechend wird dann die Schließdauer des Kraftstoffventils eingestellt oder variiert, wie in Fig. 4 unten an den rechts dargestellten Schließzeiten zu erkennen. Die Steuereinheit 13 hat die Steuerung des Kraftstoffventils übernommen; die erfindungsgemäße feste Priorisierung des Kraftstoffventils bei der Energieversorgung im Startfall ist aufgehoben.

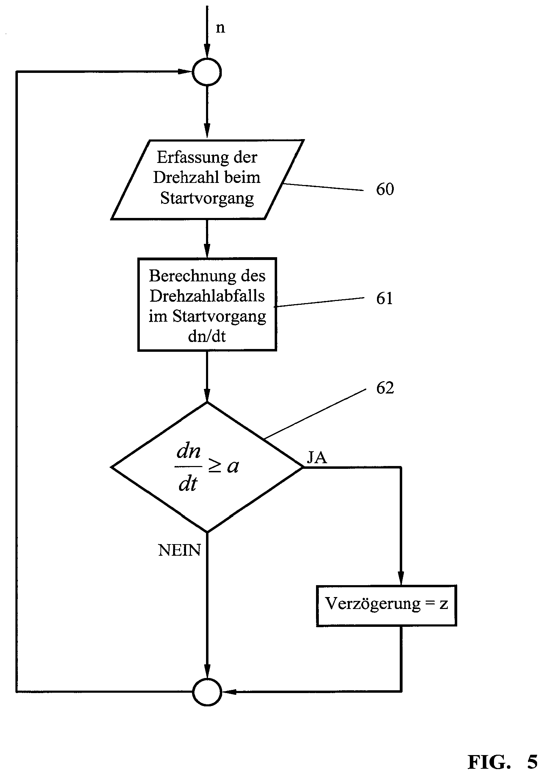

In Weiterbildung der Erfindung kann vorgesehen sein, das Schließen des elektrischen Kraftstoffventils 30 in Abhängigkeit eines Drehzahlabfalls dn/dt der Kurbelwelle 6 des Verbrennungsmotors 14 beim Startvorgang zu verzögern. Hierzu wird - vgl. das Flussdiagramm nach Fig. 5 - die Drehzahl n der Kurbelwelle 6 ausweislich Feld 60 von der Steuereinheit 13 erfasst. Kommt der Verbrennungsmotor 14 z. B. wegen Kraftstoffmangels zum Stillstand, sind die Gemischpfade und der Brennraum von Kraftstoff frei. Insbesondere bei einem Zweitaktmotor oder einem gemischgeschmierten Viertaktmotor wird dem Kraftstoff zur Schmierung Öl zugesetzt. Läuft der Verbrennungsmotor 14 trocken, nimmt die Schmierung ab, so dass eine erhöhte Reibung innerhalb des Verbrennungsmotors 14 gegeben ist. Um diesen Zustand erhöhter Reibung im Verbrennungsmotor 14 festzustellen, wird gemäß dem Flussdiagramm in Fig. 5 die Drehzahl n der Kurbelwelle 6 des Verbrennungsmotors 14 im Startvorgang zunächst erfasst (Feld 60). Startet der Verbrennungsmotor 14 nach einem Anwerfvorgang nicht, wird die Drehzahl n wieder auf Null zurückfallen. Dieser Drehzahlabfall dn/dt nach einem erfolglosen Startversuch wird gemäß Feld 61 ausgewertet und ist abhängig von der aktuellen Schmierung; ein steiler Drehzahlabfall dn/dt, also eine große Steigung, ist ein Indikator für eine verminderte Schmierung. Wird ein vorgegebener Grenzwert a für den Drehzahlabfall dn/dt überschritten, liegt ein Zustand erhöhter Reibung vor. Das Feld 62 verzweigt über den Zweig "JA" zu einer Verzögerung z, d. h., das Kraftstoffventil wird während des Startvorgangs für eine oder mehrere Kurbelwellenumdrehungen offen gehalten. So kann dem Verbrennungsmotor ausreichend Kraftstoff/Öl-Gemisch zur Verfügung gestellt und eine ausreichende Schmierung innerhalb des Verbrennungsmotors sichergestellt werden.

Wird der vorgegebene Grenzwert a für den Drehzahlabfall dn/dt nicht unterschritten, liegt kein Zustand erhöhter Reibung vor. Das Feld 62 verzweigt über den Zweig "NEIN" zurück zum Feld 60. Eine erneute Überprüfung des Drehzahlabfalls im Startvorgang wird eingeleitet.

Die Erfassung eines Zustands erhöhter Reibung ist auch vorteilhaft, wenn aufgrund von Luft oder Dampfblasen im Kraftstoffsystem die Kraftstoffförderung eingeschränkt ist. Auch eine eingeschränkte oder unterbrochene Kraftstoffförderung kann dazu führen, dass ein Zustand erhöhter Reibung im Verbrennungsmotor auftritt. Es kann vorteilhaft sein, auch in diesem Zustand das Signal zum Schließen des elektrischen Kraftstoffventils zu verzögern, um die Kraftstoffförderung zu unterstützen. Das Prinzip zur Feststellung der verminderten Schmierung erfolgt entsprechend dem Flussdiagramm in Fig. 5.

## Patentansprüche

1. Verfahren zum Starten eines Verbrennungsmotors mit einem Seilzugstarter,
• wobei dem Verbrennungsmotor (14) über einen Ansaugkanal (20) mit einem Venturiabschnitt (21) ein Kraftstoff/Luft-Gemisch zugeführt wird,
• und das Kraftstoff/Luft-Gemisch von einem Kolben (4) in einem Brennraum (7) des Verbrennungsmotors (14) verdichtet und von einer Zündkerze (8) gezündet wird, und der Kolben (4) eine Kurbelwelle (6) drehend antreibt,
• und mit einem Kraftstoffsystem, das einen in den Ansaugkanal (20) mündenden Kraftstoffkanal (28) mit einem elektrisches Kraftstoffventil (30) aufweist,
• und das Kraftstoffsystem beim Anwerfen des Verbrennungsmotors so konfiguriert ist, dass über den Ansaugkanal Verbrennungsluft angesaugt wird und aufgrund des dadurch entstehenden Saugunterdrucks über den Kraftstoffkanal (28) eine Kraftstoffmenge dem Ansaugkanal (20) zufließt,
• wobei das elektrische Kraftstoffventil (30) in seinem stromlosen Zustand offen ist und den Kraftstoffkanal (28) für einen Kraftstofffluss freigibt,
• und das elektrische Kraftstoffventil (30) bei Anlegen einer Betriebsspannung (U) den Kraftstoffkanal (28) schließt, so dass der Kraftstoffkanal (28) gesperrt ist und dem Ansaugkanal (20) kein weiterer Kraftstoff zufließt,
• und mit einer elektronischen Steuereinheit (13) zur Ansteuerung des elektrischen Kraftstoffventils (30) und zum Auslösen eines Zündfunkens an der Zündkerze (8),
• und mit einem von der Kurbelwelle (6) angetriebenen Zündgenerator (9) zur Energieversorgung der elektrischen Verbraucher wie der Steuereinheit (13), des elektrischen Kraftstoffventils (30) und der Zündeinrichtung,
**dadurch gekennzeichnet,**
• **dass** die bei beginnender Drehung der Kurbelwelle (6) erzeugte elektrische Energie des Zündgenerators (9), bevor die Steuereinheit (13) einen Zündfunken an der Zündkerze (8) auslöst, zunächst zum Schließen des elektrischen Kraftstoffventils (30) verwendet wird, damit das Kraftstoffventil (8) über mehrere Kurbelwellenumdrehungen geschlossen gehalten wird,
• wobei die Drehzahl (n) der Kurbelwelle (6) des Verbrennungsmotors (14) im Startvorgang erfasst wird,
• wobei der Drehzahlabfall (dn/dt) nach einem erfolgslosen Startversuch ausgewertet wird, und
• wobei, wenn der Drehzahlabfall (dn/dt) einen vorgegebenen Grenzwert (a) überschreitet, das Kraftstoffventil während des Startvorgangs für eine oder mehrere Kurbelwellenumdrehungen offengehalten wird.

2. Verfahren nach Anspruch 1,
**dadurch gekennzeichnet, dass** ausschließlich der Zündgenerator (9) die zum Betrieb der elektrischen Verbraucher notwendige Energie erzeugt.

3. Verfahren nach Anspruch 1,
**dadurch gekennzeichnet, dass** mit beginnender Drehung der Kurbelwelle (6) die Spannungsversorgung der Steuereinheit (13) hergestellt und die Steuereinheit (13) aufgeweckt wird.

4. Verfahren nach Anspruch 1,
**dadurch gekennzeichnet, dass** der Generator (9) eine erste Spannungswelle vor dem oberen Totpunkt (OT) des Kolbens (4) und eine zweite Spannungswelle vor dem unteren Totpunkt (UT) des Kolbens (4) erzeugt.

5. Verfahren nach Anspruch 1,
**dadurch gekennzeichnet, dass** unabhängig von der Betriebstemperatur des Verbrennungsmotors (14) bei jedem Start des Verbrennungsmotors (14) mit beginnender Umdrehung der Kurbelwelle (6) erst das Kraftstoffventil (30) bestromt wird, bevor ein Zündfunke ausgelöst wird.

6. Verfahren nach Anspruch 1,
**dadurch gekennzeichnet, dass** das Kraftstoffventil (30) über zwei bis sechs Kurbelwellenumdrehungen geschlossen gehalten wird.

7. Verfahren nach Anspruch 6,
**dadurch gekennzeichnet, dass** das Kraftstoffventil (30) über drei Kurbelwellenumdrehungen geschlossen gehalten wird.

8. Verfahren nach Anspruch 1,
**dadurch gekennzeichnet, dass** auch bei geschlossen gehaltenem Kraftstoffventil (30) ein Zündfunken ausgelöst wird.

9. Verfahren nach Anspruch 1,
**dadurch gekennzeichnet, dass** das Schließen des elektrischen Kraftstoffventils (30) in Abhängigkeit eines Drehzahlabfalls (dn/dt) beim Startvorgang verzögert wird.

## Claims

1. Method for starting a combustion engine having a pull-rope starter,
• wherein a fuel/air mixture is supplied to the combustion engine (14) via an intake channel (20) with a Venturi section (21),
• and the fuel/air mixture is compressed by a piston (4) in a combustion chamber (7) of the combustion engine (14) and ignited by a spark plug (8), and the piston (4) drives a crankshaft (6) in rotation,
• and having a fuel system which has a fuel channel (28) which issues into the intake channel (20) and has an electric fuel valve (30),
• and the fuel system, when the combustion engine is started, is configured such that combustion air is sucked in via the intake channel and a quantity of fuel flows to the intake channel (20) via the fuel channel (28) on account of the resulting vacuum pressure,
• wherein the electric fuel valve (30) is open in its deenergized state and releases the fuel channel (28) for a flow of fuel,
and the electric fuel valve (30) closes the fuel channel (28) when an operating voltage (U) is applied, so that the fuel channel (28) is blocked and no further fuel flows to the intake channel (20),
• and having an electronic control unit (13) for actuating the electric fuel valve (30) and for triggering an ignition spark at the spark plug (8),
• and having an ignition generator (9), which is driven by the crankshaft (6), for supplying energy to the electric loads such as the control unit (13), the electric fuel valve (30) and the ignition device,
**characterized**
• **in that** the electrical energy of the ignition generator (9), which electrical energy is generated as the crankshaft (6) begins to rotate, is initially used to close the electric fuel valve (30) before the control unit (13) triggers an ignition spark at the spark plug (8), so that the fuel valve (8) is kept closed over several crankshaft revolutions,
• wherein the rotation speed (n) of the crankshaft (6) of the combustion engine (14) is detected in the starting process,
• wherein the drop in rotation speed (dn/dt) is evaluated after an unsuccessful start attempt, and
• wherein, if the drop in rotation speed (dn/dt) exceeds a prespecified limit value (a), the fuel valve is kept open for one or more crankshaft revolutions during the starting process.

2. Method according to claim 1,
**characterized in that** only the ignition generator (9) generates the energy required for operating the electric loads.

3. Method according to claim 1,
**characterized in that**, as the crankshaft (6) begins to rotate, the voltage supply to the control unit (13) is established and the control unit (13) is woken up.

4. Method according to claim 1,
**characterized in that** the generator (9) generates a first voltage wave before the top dead centre (OT) of the piston (4) and a second voltage wave before the bottom dead centre (UT) of the piston (4).

5. Method according to claim 1,
**characterized in that**, independently of the operating temperature of the combustion engine (14), first of all current is supplied to the fuel valve (30) during each start of the combustion engine (14) as the crankshaft (6) begins to rotate, before an ignition spark is triggered.

6. Method according to claim 1,
**characterized in that** the fuel valve (30) is kept closed over two to six crankshaft revolutions.

7. Method according to claim 6,
**characterized in that** the fuel valve (30) is kept closed over three crankshaft revolutions.

8. Method according to claim 1,
**characterized in that** an ignition spark is triggered even when the fuel valve (30) is kept closed.

9. Method according to claim 1,
**characterized in that** closing of the electric fuel valve (30) is delayed depending on a drop in rotation speed (dn/dt) during the starting process.

## Revendications

1. Procédé permettant de démarrer un moteur à combustion interne pourvu d'un démarreur à câble,
• dans lequel un mélange carburant/air est amené au moteur à combustion interne (14) par un passage d'admission (20) pourvu d'une section à venturi (21),
• et le mélange carburant/air est comprimé par un piston (4) dans une chambre de combustion (7) du moteur à combustion interne (14) et est allumé par une bougie d'allumage (8), et le piston (4) entraîne un vilebrequin (6) en rotation,
• et comprenant un système de carburant qui présente un passage de carburant (28) débouchant sur le passage d'admission (20) et pourvu d'une soupape de carburant électrique (30),
• et lors de la mise en marche du moteur à combustion interne, le système de carburant est configuré de telle sorte que de l'air de combustion est admis par le passage d'admission, et en raison de la dépression d'aspiration ainsi provoquée, une quantité de carburant s'écoule vers le passage d'admission (20) par le passage de carburant (28),
• dans lequel la soupape de carburant électrique (30) est ouverte à l'état hors tension et libère le passage de carburant (28) pour un flux de carburant,
• et lorsqu'une tension de service (U) est appliquée, la soupape de carburant électrique (30) ferme le passage de carburant (28) de sorte que le passage de carburant (28) est bloqué et aucun carburant supplémentaire ne s'écoule vers le passage d'admission (20),
• et comprenant une unité de commande électronique (13) pour piloter la soupape de carburant électrique (30) et pour déclencher une étincelle d'allumage au niveau de la bougie d'allumage (8),
• et comprenant un générateur d'allumage (9) entraîné par le vilebrequin (6) pour l'alimentation en énergie des consommateurs électriques, comme l'unité de commande (13), la soupape de carburant électrique (30) et le dispositif d'allumage,
**caractérisé en ce que**
• l'énergie électrique du générateur d'allumage (9), générée au début d'une rotation du vilebrequin (6), avant que l'unité de commande (13) ne déclenche une étincelle d'allumage au niveau de la bougie d'allumage (8), est d'abord utilisée pour fermer la soupape de carburant électrique (30) pour que la soupape de carburant (8) soit maintenue fermée pendant plusieurs tours de vilebrequin,
• dans lequel la vitesse de rotation (n) du vilebrequin (6) du moteur à combustion interne (14) est détectée lors du processus de démarrage,
• dans lequel la chute de vitesse de rotation (dn/dt) après une tentative de démarrage échouée est évaluée, et
• dans lequel, si la chute de vitesse de rotation (dn/dt) dépasse une valeur limite prédéfinie (a), la soupape de carburant est maintenue ouverte pendant le processus de démarrage pendant un ou plusieurs tours de vilebrequin.

2. Procédé selon la revendication 1,
**caractérisé en ce que** seul le générateur d'allumage (9) génère l'énergie nécessaire au fonctionnement des consommateurs électriques.

3. Procédé selon la revendication 1,
**caractérisé en ce qu'**au début d'une rotation du vilebrequin (6), l'alimentation en tension de l'unité de commande (13) est établie et l'unité de commande (13) est réveillée.

4. Procédé selon la revendication 1,
**caractérisé en ce que** le générateur (9) génère une première onde de tension avant le point mort haut (PMH) du piston (4) et une deuxième onde de tension avant le point mort bas (PMB) du piston (4).

5. Procédé selon la revendication 1,
**caractérisé en ce qu'**indépendamment de la température de fonctionnement du moteur à combustion interne (14), à chaque démarrage du moteur à combustion interne (14) au début d'un tour du vilebrequin (6), la soupape de carburant (30) est d'abord excitée avant qu'une étincelle d'allumage ne soit déclenchée.

6. Procédé selon la revendication 1,
**caractérisé en ce que** la soupape de carburant (30) est maintenue fermée pendant deux à six tours de vilebrequin.

7. Procédé selon la revendication 6,
**caractérisé en ce que** la soupape de carburant (30) est maintenue fermée pendant trois tours de vilebrequin.

8. Procédé selon la revendication 1,
**caractérisé en ce qu'**une étincelle d'allumage est déclenchée pendant que la soupape de carburant (30) est maintenue fermée.

9. Procédé selon la revendication 1,
**caractérisé en ce que** la fermeture de la soupape de carburant électrique (30) est retardée en fonction d'une chute de vitesse de rotation (dn/dt) lors du processus de démarrage.
